# FASCICULE DE BREVET EUROPEEN

(11) **EP 0 811 582 B1**
(45) Date de publication et mention de la délivrance du brevet: **25.07.2001**
(21) Numéro de dépôt: 97401200.7
(22) Date de dépôt: 30.05.1997
(51) Int. Cl.: C03C 17/28, C03C 19/00, B24C 1/06

(54) **Objet en verre ou matériau de type verre à aspect satiné et son procédé de fabrication**
Glas- oder glasartiger Gegenstand mit satiniertem Aussehen und Verfahren zu dessen Herstellung
Glass or glass-type article with satin appearance and its production process

(30) Priorité: 04.06.1996 FR 9606868
(43) Date de publication de la demande: 10.12.1997
(73) Titulaire: TOTAL RAFFINAGE DISTRIBUTION S.A., 92800 Puteaux (FR)
(72) Inventeur: Delalot, José, 77169 Chauffry (FR); Vacher, Christian, 76290 Montivilliers (FR); Quenardel, Raymond, 77510 Rebais (FR)
(74) Mandataire: Jolly, Jean-Pierre

(56) Documents cités:
- WO-A-95/14552
- DE-A- 3 323 179
- DE-A- 3 734 464
- FR-A- 2 343 707
- US-A- 4 343 641
- PATENT ABSTRACTS OF JAPAN vol. 018, no. 506 (C-1252), 22 septembre 1994 & JP 06 171983 A (KIRIN BREWERY CO LTD), 21 juin 1994,

## Description

L'invention concerne un objet en verre ou matériau de type verre, tel qu'une bouteille ou un flacon, ayant à certains endroits au moins, un aspect satiné. L'invention concerne également un procédé de fabrication d'un tel objet.

### ETAT DE LA TECHNIQUE

Il est connu de donner un aspect satiné à certaines parties d'un verre, tel que celui d'une bouteille, par dépolissage. Le dépolissage du verre le plus couramment utilisé se fait par « voie acide » c'est-à-dire par immersion du récipient dans un bain à base d'acides, puis sortie du récipient du bain, rinçage et séchage. Cette technique présente cependant de nombreux inconvénients dont les principaux sont les suivants :
- le dépolissage doit être précédé d'une opération de décapage de la surface du verre à satiner, faute de quoi la surface du verre résisterait à l'attaque chimique,
- afin d'éviter la pénétration accidentelle d'acides à l'intérieur du récipient en verre, ce qui serait dangereux pour l'utilisateur lorsque le contenu du récipient est destiné à être ingéré ou vaporisé, il est indispensable de prévoir une étape de bouchage hermétique du récipient avant son immersion dans le bain à base d'acides,
- il est difficile d'effectuer un bon rinçage du récipient, de ce fait, il risque de subsister des dépôts blanchâtres de résidu de bain d'acides sur le récipient et ces dépôts constituent un danger pour les utilisateurs,
- le rinçage du récipient produit d'importantes quantités d'eau, qu'il faut recycler, et de boues qui doivent subir des traitements très coûteux et soumis à une réglementation de plus en plus stricte.

Afin d'éviter le recours à cette technique dite « par voie acide » et d'en éviter les inconvénients, on peut utiliser également la technique utilisant une « voie mécanique » telle que celle du « sablage », qui consiste à projeter des particules d'un matériau présentant une grande dureté contre la partie de la surface externe du récipient à laquelle on souhaite donner un aspect satiné. Cette technique donne cependant au récipient un aspect blanchâtre peu agréable. En outre, la partie sablée du récipient est facilement et rapidement tachée par des contacts externes, par exemple par contact avec les doigts d'un utilisateur et les taches ainsi produites ne peuvent alors pratiquement pas être éliminées.

On connaît aussi par Patent Abstract of Japon, vol. 18, n° 506 (C-1252), 22-9-94 & JP - A 617 1983, un objet en verre cristallisé obtenu par coalescence de grains de verre, dont la surface est polie et traitée ensuite avec de la paraffine, destinée à remplir les trous de surface provoqués par les bulles du verre.

### EXPOSE SOMMAIRE DE L'INVENTION

En poursuivant ses travaux de recherche sur le traitement des surfaces en verre, la Demanderesse a mis au point un objet en verre ou matériau de type verre, qui présente, à certains endroits au moins, un aspect satiné agréable, harmonieux, uniforme, et qui ne peut pas être taché lors de sa manipulation.

Plus précisément, l'invention a trait à un objet en verre ou matériau de type verre, caractérisé en ce qu'il comprend au moins une surface au moins partiellement dépolie mécaniquement et revêtue d'une composition comprenant au moins un produit paraffineux.

L'invention a également trait à un procédé de fabrication d'un tel objet en verre ou matériau de type verre.

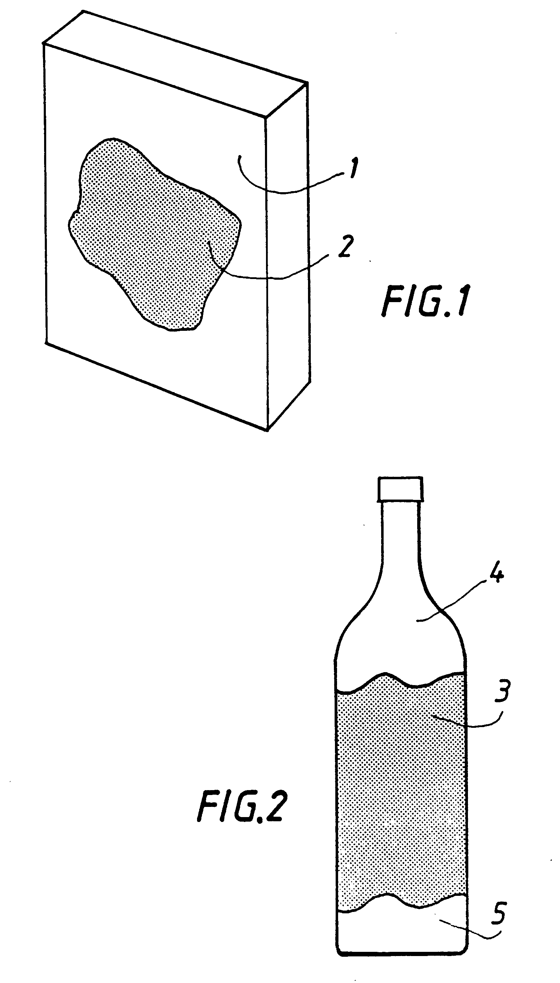

D'autres avantages de l'objet en verre ou matériau de type verre et du procédé selon l'invention ressortiront à la lecture de la suite de la description, à laquelle sont annexées, uniquement à titre illustratif, les figures 1 et 2.

### DESCRIPTION SOMMAIRE DES FIGURES

La figure 1 représente schématiquement, en perspective, l'objet en verre ou matériau de type verre selon l'invention se présentant sous la forme d'une vitre.

La figure 2 représente schématiquement, en vue de face, un objet en verre ou matériau de type verre selon l'invention se présentant sous la forme d'une bouteille.

### EXPOSE DETAILLE DE L'INVENTION

Par « aspect satiné », on entend dans le présent exposé un aspect se situant entre l'aspect mat et l'aspect brillant.

Par « verre ou matériau de type verre », on entend tout type de verre, y compris les verres dits « blancs » (transparents), les verres de couleur, le verre alimentaire et le cristal. L'invention est particulièrement avantageuse lorsque le verre est un verre de couleur.

L'objet en verre ou matériau de type verre selon l'invention est illustré schématiquement, d'une manière générale et simplificatrice, sous la forme d'une vitre sur la figure 1. Il possède sur une face 1, une partie modifiée 2. La première modification de cette partie 2 se traduit généralement par l'aspect blanchâtre ou grisé qu'elle confère au verre et qui fait donc perdre à ce verre sa transparence tout en lui permettant de conserver une certaine translucidité.

Cette première modification de la partie 2 peut être réalisée par tout procédé permettant de dépolir le verre, c'est-à-dire de lui faire perdre son caractère lisse en rendant irrégulière sa surface en créant des aspérités dans les couches superficielles du verre. La modification peut donc être obtenue par un procédé, en général mécanique, faisant intervenir soit une abrasion, soit un frottement entre un matériau dur et la surface du verre, soit un choc, soit une projection de particules d'un matériau dur contre la surface du verre de manière à provoquer des rayures ou de minuscules détachements (par rupture) de morceaux de verre. Comme exemple d'un tel procédé, on peut citer le sablage ou l'hydrosablage.

Le sablage peut être défini en particulier comme consistant à projeter, sur la surface du verre, au moyen d'air comprimé, des particules d'un matériau de grande dureté tel que le corindon. La dimension des particules est choisie en fonction de l'aspect que l'on souhaite donner à l'objet.

L'hydrosablage peut être défini comme étant un sablage dans lequel les particules sont préalablement mises en suspension dans un liquide, en général un milieu aqueux, puis projetées au moyen d'air comprimé, par exemple à l'aide d'un pistolet de sablage. C'est donc généralement un mélange d'eau, de particules et d'air qui vient percuter la surface du verre. L'hydrosablage permet d'obtenir un aspect moins blanchâtre ou grisé que le sablage.

La seconde modification est un traitement selon l'invention par une composition comprenant au moins un produit paraffineux. Ce traitement consiste à appliquer ladite composition sur toute la partie modifiée 2. Cette dernière peut donc généralement être considérée comme étant entièrement revêtue par la composition comprenant au moins un produit paraffineux.

Par produit paraffineux, on entend dans la présente description, un produit d'origine synthétique, naturelle ou pétrolière. Ce produit a généralement une température de fusion comprise entre 40 et 90°C. Il peut donc s'agir d'une paraffine, d'un mélange de paraffines, d'une cire, d'un mélange de cires ou d'un mélange de paraffine(s) et de cire(s).

Les paraffines sont des produits bien connus ayant une température de fusion comprise entre environ 40°C et environ 70°C.

Les cires sont également des produit bien connus ayant une température de fusion comprise entre environ 70°C et environ 90°C.

Ainsi, le produit paraffineux, tel qu'il vient d'être défini, présente-t-il le double avantage d'être solide à température ambiante, ce qui lui permet de se maintenir sur la partie modifiée de l'objet en verre, et d'être facilement liquéfiable, ce qui facilite son application, comme on le verra ci-après lors de la description du procédé selon l'invention.

Bien que les paraffines ne soient pas toxiques, contrairement aux acides utilisés dans l'état de la technique pour les attaques acides du verre, il est avantageux d'utiliser comme produit paraffineux, un produit paraffineux pour contact alimentaire car l'objet en verre selon l'invention peut alors être utilisé, sans aucun risque pour la santé, dans des applications où il peut être amené à entrer en contact avec des aliments ou des parties du corps humain ou lorsqu'il doit contenir des produits qui sont eux-mêmes destinés à être appliqués sur le corps humain (crèmes, parfums...).

Comme exemples de produits paraffineux pour contact alimentaire, on peut citer les paraffines alimentaires, les cires alimentaires et leurs mélanges. Ces produits sont les produits (décrits ci-dessus) issus du raffinage du pétrole qui ont subi un grand nombre d'opérations de raffinage bien connues.

Il est souhaitable de mettre en oeuvre un produit paraffineux ayant une température de fusion d'au moins 40°C et de préférence d'au moins 50°C lorsque l'objet en verre est destiné à être exporté dans des pays chauds ou à être exposé au soleil ou à toute autre source de chaleur.

De préférence, la composition revêtant la partie modifiée 2 (appelée ci-après composition de revêtement) comprend en outre, en vue d'augmenter sa durée de vie et par conséquent celle de l'objet en verre selon l'invention, au moins un antioxydant. Comme antioxydant, on peut mettre en oeuvre tout antioxydant convenant aux paraffines ou cires. A titre d'exemple, on peut citer le 2,6-di-tertiobutyl, 4-méthyl phénol.

Il est préférable que la composition de revêtement comprenne également au moins un additif destiné à augmenter sa dureté. Ceci permet alors à la partie modifiée revêtue de mieux résister à l'usure par frottement et rend plus difficile la création de rayures à sa surface. Comme additif, on peut utiliser tout composé approprié, à savoir tout additif ayant une température de fusion suffisamment élevée (supérieure à environ 40°C), présentant une dureté supérieure à celle du produit paraffineux (à une température comprise entre environ 40°C et environ 90°C), et étant miscible avec le produit paraffineux ou soluble dans ce dernier. Il est en outre avantageux que cet additif soit apte à augmenter la viscosité de la composition de revêtement à l'état fondu, de façon à faciliter son maintien sur la partie modifiée lors de la fabrication de l'objet en verre selon l'invention. Comme exemples d'un tel additif, on peut citer les polyéthylènes, les polypropylènes et leurs mélanges. De préférence, on utilise les polyéthylènes.

La composition de revêtement comprend aussi, préférentiellement, au moins un additif destiné à augmenter son adhésivité, de manière à accroître l'adhérence de la composition à la partie modifiée de l'objet en verre. Comme exemples d'un tel additif, on peut citer les copolymères éthylène-acétate de vinyle (EVA).

L'objet en verre selon l'invention peut revêtir des formes très variées. Sur la figure 1, il est représenté sous forme plane mais, selon un mode de réalisation préféré de l'invention, il se présente sous la forme d'un récipient ou d'une ampoule électrique. Dans ce cas, il est préférable, pour des raisons pratiques ou esthétiques, que la face modifiée ou comportant une partie modifiée soit une face externe du récipient ou de l'ampoule.

Le récipient peut être une bouteille ou un flacon pouvant contenir des produits très divers tels que des boissons (vins, cognac...), des parfums, des produits de soin corporel (crèmes...), des produits chimiques ou même des solvants. En effet, un avantage important procuré par l'utilisation d'un produit paraffineux est qu'un tel produit est pratiquement insoluble dans tous les solvants habituels et résiste à de nombreux composés tels que les acides, les bases, les alcools, l'eau, etc... Par conséquent, si lors du versement ou du prélèvement du contenu du récipient, des gouttes tombent sur la partie modifiée et revêtue, il n'y a pas de dissolution ou de destruction de la composition de revêtement et les gouttes coulent sans modifier l'aspect du récipient.

Bien évidemment, l'objet en verre ou matériau de type verre n'est pas nécessairement un produit fini à lui seul : il peut faire partie d'un objet composite tel qu'une porte de salle de bains vitrée, etc.

### Procédé selon l'invention

L'objet en verre ou matériau de type verre selon l'invention peut être préparé par traitement mécanique suivi d'un revêtement de la partie modifiée d'une face d'un objet en verre ou matériau de type verre ayant au moins une face au moins partiellement modifiée, à l'aide d'une composition de revêtement comprenant au moins un produit paraffineux.

Bien qu'il soit possible de mettre en oeuvre la composition de revêtement à froid dans un solvant ou sous forme d'émulsion, on porte en général la composition de revêtement à une température égale ou, de préférence supérieure à sa température de fusion, de façon à ce qu'elle se liquéfie, puis on l'applique, de préférence par vaporisation, atomisation ou pulvérisation et projection sur la partie modifiée de l'objet en verre ou matériau de type verre.

La vaporisation de la composition est de préférence réalisée par entraînement au moyen d'air comprimé, en créant des gouttelettes.

L'atomisation peut être considérée comme une opération de vaporisation plus poussée, en ce sens que les gouttelettes ont de plus petites dimensions que dans le cas de la vaporisation.

La pulvérisation se fait sans employer d'air comprimé, en utilisant un appareil tel qu'un pistolet à peinture électrique.

La projection de la composition se fait généralement, en pratique, en même temps que sa vaporisation, atomisation ou pulvérisation.

De préférence, avant la vaporisation, l'atomisation ou la pulvérisation, on chauffe également l'objet en verre. Ce chauffage permet de limiter la quantité de produit paraffineux qui doit rester sur le verre. La température atteinte par l'objet en verre doit cependant demeurer inférieure à la température à laquelle le produit paraffineux se décompose. En général, on veille à ce qu'elle demeure autour de 100°C.

Immédiatement après l'application de la composition de revêtement, on soumet généralement la partie modifiée, revêtue et encore chaude, à une opération de brossage ou essuyage, de façon à éliminer l'excès de composition de revêtement. Cette opération est destinée à limiter à une valeur très faible la quantité de composition restant sur la partie modifiée. Cette quantité peut être évaluée à 0,1 à 5 mg/cm² de surface modifiée. Elle est liée à l'état de surface du verre aux endroits qui ont été modifiés, c'est-à-dire, si la modification de la surface à été réalisée par sablage ou hydrosablage, à la granulométrie des particules projetées.

On peut ainsi généralement évaluer à quelques microns l'épaisseur du revêtement obtenue.

La faible épaisseur du revêtement est particulièrement avantageuse car elle ne fera pas obstacle, ultérieurement, à la fixation éventuelle d'une étiquette par collage.

Après le brossage, on refroidit généralement l'objet en verre, de façon à ramener rapidement sa température à la température ambiante et à pouvoir le stocker le cas échéant.

### Exemples de réalisation

Une bouteille en verre selon l'invention représentée schématiquement par la figure 2 a été réalisée de la manière suivante.

On a tout d'abord créé une partie modifiée 3 par hydrosablage sur la face externe d'une bouteille normale, lisse (polie). Par face externe, on entend la face opposée à celle qui doit être en contact avec le contenu de la bouteille.

La modification a été effectuée par introduction d'une suspension aqueuse de particules de corindon passant à travers un tamis de 27 µ (microns) dans un pistolet de sablage et projection de cette suspension au moyen d'air comprimé sous une pression de 4.10⁵ Pa (4 bars) contre la surface de la bouteille à modifier. Le débit d'air comprimé est d'environ 20 m³/h. Les particules de corindon étaient préalablement mises et maintenues en suspension par agitation, dans une cuve, aspirées à l'aide d'une pompe et amenées à l'orifice d'entrée de matière (appelé orifice de gavage) du pistolet de sablage sous une très faible pression (à peine supérieure à la pression atmosphérique) et avec un débit d'environ 90 l/h. Durant la projection, qui a duré environ 30 secondes, la bouteille effectuait une rotation suivant son axe de révolution. Afin de protéger les parties 4 et 5 de la face externe qui ne devaient pas être modifiées, une réserve (ou masque) constituée de 2 demi-coquilles en polyuréthane avait été préalablement plaquée au moyen de pinces sur ces parties 4 et 5.

Une fois la projection de particules de corindon terminée, la bouteille a été rincée puis séchée à l'air chaud.

La bouteille a ensuite été chauffée à 100-110 °C et on a atomisé et projeté sur la partie modifiée 3, à l'aide d'un pistolet de pulvérisation, une composition de revêtement disponible auprès de la société TOTAL. Cette composition présente une viscosité de 95 mm²/s (mesurée à 120°C à l'aide d'un tube viscosimétrique UBBELHODE) et une température de ramolissement de 80°C. Elle comprend comme constituant essentiel une paraffine et un certain nombre de constituants minoritaires tels qu'un anti-oxydant, un polyéthylène basse densité et un copolymère éthylène-acétate de vinyle (EVA).

Immédiatement après la projection de la composition de revêtement atomisée, la bouteille a été soumise à un brossage sur la partie modifiée qui venait d'être revêtue, de façon à enlever le maximum de composition de revêtement avant son durcissement.

La bouteille a ensuite été refroidie.

D'autres bouteilles selon l'invention ont été réalisées de manière analogue, à l'exception près qu'après le séchage consécutif à l'hydrosablage, les bouteilles étaient sérigraphiées à l'émail de façon classique sur leur face externe (la sérigraphie étant possible même sur les parties hydrosablées), elles passaient ensuite dans un tunnel ou arche de recuisson à 600-650°C, puis après refroidissement jusqu'à 100-110°C, elles recevaient la composition de revêtement atomisée.

On a également réalisé d'autres bouteilles selon l'invention sur lesquelles, après l'application de la composition de revêtement et le refroidissement, on appliquait de façon connue une encre organique sur la surface externe des bouteilles (le cas échéant sur la partie modifiée), de façon à réaliser des motifs, on étuvait ensuite la bouteille à 120-130°C et on la refroidissait ou la laissait refroidir. De façon surprenante, bien que l'étuvage eût lieu à une température supérieure à la température de fusion du produit paraffineux, l'aspect satiné de la bouteille selon l'invention n'avait pas disparu suite au passage à l'étuve. Il s'est avéré également que la présence du revêtement ne s'opposait nullement à l'adhésion de l'encre organique. En outre, on a pu fixer des étiquettes adhésives sur la partie modifiée (dépourvue de motif en encre organique) sans que le revêtement ne perturbe leur adhésion.

La comparaison d'une bouteille uniquement hydrosablée à une bouteille hydrosablée de la même manière et revêtue selon l'invention, a permis de faire les constatations suivantes :
- la bouteille selon l'invention est plus translucide que la bouteille uniquement hydrosablée,
- elle peut être prise en main et manipulée sans que l'on puisse constater l'apparition de taches,
- l'aspect général de sa partie modifiée est plus uniforme et satiné,
- l'existence du revêtement sur la bouteille selon l'invention est indécelable à l'oeil nu et la partie hydrosablée revêtue est plus douce au toucher que celle de la bouteille uniquement hydrosablée,
- la quantité de revêtement présent sur la partie hydrosablée de la bouteille selon l'invention est si faible que, quand on gratte avec un instrument tranchant, tel qu'un « cutter », la partie hydrosablée revêtue, on ne parvient pas à arracher le revêtement ou à déceler à l'oeil nu la présence de morceaux de revêtement sur le « cutter ».

Par ailleurs, l'aspect satiné d'une bouteille selon l'invention est tout à fait comparable à celui d'une bouteille de l'état de la technique préparée par attaque acide.

Dans le cas des verres de couleur, la blancheur produite normalement par le sablage ou l'hydrosablage disparaît totalement et est remplacée par un aspect satiné agréable, grâce à l'application selon l'invention d'un revêtement à base de produit paraffineux sur la partie sablée ou hydrosablée.

## Revendications

1. Objet en verre ou matériau du type verre, **caractérisé en ce qu'il** comprend au moins une surface (2, 3) au moins partiellement dépolie mécaniquement et revêtu d'une composition comprenant au moins un produit paraffineux.

2. Objet en verre ou matériau de type verre selon la revendication précédente, **caractérisé en ce que** le produit paraffineux est une paraffine ou un mélange de paraffines.

3. Objet en verre ou matériau de type verre selon la revendication 1, **caractérisé en ce que** le produit paraffineux est une cire ou un mélange de cires.

4. Objet en verre ou matériau de type verre selon l'une des revendications 1 à 3, **caractérisé en ce que** le produit paraffineux est un produit paraffineux alimentaire.

5. Objet en verre ou matériau de type verre selon l'une des revendications 1 à 4, **caractérisé en ce qu**'il contient une quantité de ladite composition comprise entre 0,1 et 5 mg/cm² de surface modifiée dépolie (2,3).

6. Objet en verre ou matériau de type verre selon l'une des revendications 1 à 5, **caractérisé en ce que** la surface dépolie mécaniquement a été dépolie par frottement, abrasion ou choc avec des particules solides.

7. Objet en verre ou matériau de type verre selon l'une des revendications 1 à 6, **caractérisé en ce que** ladite surface dépolie mécaniquement a été dépolie par projection de particules solides en suspension dans un liquide.

8. Objet en verre ou matériau de type verre selon l'une quelconque des revendications précédentes, **caractérisé en ce que** ladite composition comprend en outre au moins un antioxydant.

9. Objet en verre ou matériau de type verre selon l'une quelconque des revendications précédentes, **caractérisé en ce que** ladite composition comprend en outre au moins un additif destiné à augmenter sa dureté.

10. Objet en verre ou matériau de type verre selon la revendication précédente, **caractérisé en ce que** l'additif est choisi dans le groupe constitué par les polyéthylènes, les polypropylènes et leurs mélanges.

11. Objet en verre ou matériau de type verre selon l'une quelconque des revendications précédentes, **caractérisé en ce que** ladite composition comprend en outre au moins un additif destiné à augmenter son adhésivité.

12. Objet en verre ou matériau de type verre selon la revendication précédente, **caractérisé en ce que** l'adhésif destiné à augmenter l'adhésivité est un copolymère éthylène-acétate de vinyle (EVA).

13. Objet en verre ou matériau de type verre selon l'une quelconque des revendications précédentes, **caractérisé en ce qu**'il revêt la forme d'un récipient, la ou les faces au moins partiellement modifiées (3) étant des faces externes de ce récipient.

14. Objet en verre ou matériau de type verre selon la revendication précédente, **caractérisé en ce qu**'il a la forme d'une bouteille, d'un flacon ou d'une ampoule électrique.

15. Procédé de fabrication d'un objet en verre ou matériau de type verre selon l'une des revendications précédentes, **caractérisé en ce qu**'on fait subir au moins partiellement à une face (1) d'un objet en verre ou matériau de type verre, un dépolissage mécanique, suivi d'un revêtement à l'aide d'une composition comprenant au moins un produit paraffineux.

16. Procédé selon la revendication 15, **caractérisé en ce qu**'il comprend les étapes suivantes :
- le dépolissage mécanique d'au moins une partie d'une face (1) dudit objet en verre ou matériau de type verre,
- le chauffage d'une composition de revêtement comprenant au moins un produit paraffineux jusqu'à ce que cette composition se liquéfie,
- l'atomisation, la vaporisation ou la pulvérisation de la composition de revêtement liquide et sa projection sur la partie dépolie (2,3) de l'objet,
- le brossage de la partie dépolie (2,3) sur laquelle vient d'être projetée la composition de revêtement,
- le refroidissement de l'objet.

## Claims

1. An article of glass or glass-type material, **characterised in that** it comprises at least one surface (2, 3) at least partially frosted mechanically and coated with a composition comprising at least one paraffin product.

2. An article of glass or glass-type material according to the preceding claim, **characterised in that** the paraffin product is a paraffin or a mixture of paraffins.

3. An article of glass or glass-type material according to claim 1, **characterised in that** the paraffin product is a wax or a mixture of waxes.

4. An article of glass or glass-type material according to one of claims 1 to 3, **characterised in that** the paraffin product is an edible paraffin product.

5. An article of glass or glass-type material according to one of claims 1 to 4, **characterised in that** it contains a quantity of said composition of between 0.1 and 5 mg/cm² of modified frosted surface (2, 3).

6. An article of glass or glass-type material according to one of claims 1 to 5, **characterised in that** the mechanically frosted surface is frosted by rubbing, abrasion or impacting with solid particles.

7. An article of glass or glass-type material according to one of claims 1 to 6, **characterised in that** said mechanically frosted surface is frosted by the projection of solid particles in suspension in a liquid.

8. An article of glass or glass-type material according to any one of the preceding claims, **characterised in that** said composition further comprises at least one antioxidant.

9. An article of glass or glass-type material according to any one of the preceding claims, **characterised in that** said composition further comprises at least one additive designed to increase the hardness thereof.

10. An article of glass or glass-type material according to the preceding claim, **characterised in that** the additive is selected from the group comprising polyethylenes, polypropylenes and mixtures thereof.

11. An article of glass or glass-type material according to any one of the preceding claims, **characterised in that** said composition further comprises at least one additive designed to increase the adhesive strength thereof.

12. An article of glass or glass-type material according to the preceding claim, **characterised in that** the additive designed to increase adhesive strength is an ethylene/vinyl acetate (EVA) copolymer.

13. An article of glass or glass-type material according to any one of the preceding claims, **characterised in that** it takes the form of a receptacle, the at least partially modified face or faces (3) being the outer faces of said receptacle.

14. An article of glass or glass-type material according to the preceding claim, **characterised in that** it takes the form of a bottle, a vial or an electric light bulb.

15. A process for producing an article of glass or glass-type material according to one of the preceding claims, **characterised in that** a face (1) of an article of glass or glass-type material is subjected at least partially to mechanical frosting, followed by coating by means of a composition comprising at least one paraffin product.

16. A process according to claim 15, **characterised in that** it comprises the following stages:
- mechanical frosting of at least part of a face (1) of said article of glass or glass-type material,
- heating of a coating composition comprising at least one paraffin product until said composition becomes liquid,
- atomisation, vaporisation or spraying of the liquid coating composition and projection thereof onto the frosted part (2, 3) of the object,
- brushing of the frosted part (2, 3) onto which the coating composition has just been projected,
- cooling of the article.

## Patentansprüche

1. Gegenstand aus Glas oder einem glasartigen Material,
dadurch gekennzeichnet, dass er wenigstens eine Oberfläche (2,3) aufweist, welche Oberfläche zumindest teilweise mechanisch mattiert und mit einer wenigstens ein paraffines Produkt aufweisenden Mischung überzogen ist.

2. Gegenstand aus Glas oder einem glasartigen Material nach Anspruch 1,
dadurch gekennzeichnet, dass das paraffine Produkt ein Paraffin oder eine Mischung aus Paraffinen ist.

3. Gegenstand aus Glas oder einem glasartigen Material nach Anspruch 1,
dadurch gekennzeichnet, dass das paraffine Produkt ein Wachs oder eine Mischung aus Wachsen ist.

4. Gegenstand aus Glas oder einem glasartigen Material nach einem der Ansprüche 1 bis 3,
dadurch gekennzeichnet, dass das paraffine Produkt ein paraffines Nahrungsmittel ist.

5. Gegenstand aus Glas oder einem glasartigen Material nach einem der Ansprüche 1 bis 4,
dadurch gekennzeichnet, dass er eine Menge der Mischung zwischen 0, 1 und 5 mg/cm² der modifizierten mattierten Oberfläche (2,3) aufweist.

6. Gegenstand aus Glas oder einem glasartigen Material nach einem der Ansprüche 1 bis 5,
dadurch gekennzeichnet, dass die mechanisch mattierte Oberfläche durch Abreiben, Abschleifen oder Bestrahlen mit festen Partikeln mattiert worden ist.

7. Gegenstand aus Glas oder einem glasartigen Material nach einem der Ansprüche 1 bis 6,
dadurch gekennzeichnet, dass die mechanisch mattierte Oberfläche durch Bestrahlen mit festen Partikeln in Suspension in einer Flüssigkeit mattiert worden ist.

8. Gegenstand aus Glas oder einem glasartigen Material nach einem der vorstehenden Ansprüche,
dadurch gekennzeichnet, dass die Mischung außerdem wenigstens ein Antioxidans aufweist.

9. Gegenstand aus Glas oder einem glasartigen Material nach einem der vorstehenden Ansprüche,
dadurch gekennzeichnet, dass die Mischung außerdem wenigsten ein ihre Härte erhöhendes Additiv aufweist.

10. Gegenstand aus Glas oder einem glasartigen Material nach Anspruch 9,
dadurch gekennzeichnet, dass das Additiv aus der durch die Polyethylene, Polypropylene und ihre Mischungen gebildeten Gruppe gewählt ist.

11. Gegenstand aus Glas oder einem glasartigen Material nach einem der vorstehenden Ansprüche,
dadurch gekennzeichnet, dass die Mischung außerdem wenigstens ein ihr Adhäsionsvermögen erhöhendes Additiv aufweist.

12. Gegenstand aus Glas oder einem glasartigen Material nach Anspruch 11,
dadurch gekennzeichnet, dass das das Adhäsionsvermögen erhöhende Additiv ein Ethylen-Vinylacetat-Copolymer (EVA) ist.

13. Gegenstand aus Glas oder einem glasartigen Material nach einem der vorstehenden Ansprüche,
dadurch gekennzeichnet, dass er die Form eines Behälters aufweist, wobei es sich bei der einen oder den zumindest teilweise modifizierten Oberflächen (3) um äußere Oberflächen des Behälters handelt.

14. Gegenstand aus Glas oder einem glasartigen Material nach Anspruch 13,
dadurch gekennzeichnet, dass er die Form einer Flasche, eines Flakons oder eines Lampenkolbens aufweist.

15. Verfahren zur Herstellung eines Gegenstands aus Glas oder einem glasartigen Material nach einem der vorstehenden Ansprüche,
dadurch gekennzeichnet, dass man wenigstens einen Teil einer Oberfläche (1) eines Gegenstands aus Glas oder einem glasartigen Material einer mechanischen Mattierung unterzieht, an die sich ein Überziehen mit einer wenigstens ein paraffines Produkt aufweisenden Mischung anschließt.

16. Verfahren nach Anspruch 15,
dadurch gekennzeichnet, dass es die folgenden Schritte aufweist:
- Wenigstens ein Teil einer Oberfläche (1) des Gegenstands aus Glas oder einem glasartigen Material wird mechanisch mattiert,
- eine Überzugsmischung mit wenigstens einem paraffinen Produkt wird erwärmt, bis die Mischung flüssig wird,
- die flüssige Überzugsmischung wird atomisiert, verdampft oder pulverisiert und auf die mattierte Oberfläche (2,3) des Gegenstands aufgebracht,
- die mit der Überzugsmischung versehene mattierte Oberfläche (2,3) wird gebürstet, und
- der Gegenstand wird abgekühlt.
